Europäisches Patentamt

European Patent Office

Office européen des brevets

(19)

(11) Veröffentlichungsnummer: **0 056 842**
**B1**

(12) **EUROPÄISCHE PATENTSCHRIFT**

(45) Veröffentlichungstag der Patentschrift:
09.05.84

(51) Int. Cl.³: **C 08 F 220/04**, C 08 F 2/24,
C 09 D 11/10

(21) Anmeldenummer: 81108306.2

(22) Anmeldetag: 14.10.81

(54) Verfahren zur Herstellung von wässrigen Kunststoffdispersionen mit hohem Pigmentbindevermögen.

(30) Priorität: 22.01.81 DE 3101892

(43) Veröffentlichungstag der Anmeldung:
04.08.82 Patentblatt 82/31

(45) Bekanntmachung des Hinweises auf die Patenterteilung:
09.05.84 Patentblatt 84/19

(84) Benannte Vertragsstaaten:
DE FR GB IT NL

(56) Entgegenhaltungen:
DE - A - 2 458 604
DE - A - 2 801 099
US - A - 3 607 813
US - A - 4 167 464

(73) Patentinhaber: Röhm GmbH, Kirschenallee
Postfach 4242, D-6100 Darmstadt 1 (DE)

(72) Erfinder: Dinklage, Horst, Am Schlangensee 93,
D-6110 Dieburg (DE)
Erfinder: Fink, Herbert, Dr., Berliner Strasse 24,
D-6101 Bickenbach (DE)
Erfinder: Frank, Peter, Neutsche Strasse 14,
D-6104 Seeheim-Jugenheim 3 (DE)
Erfinder: Rauch, Hubert, Odenwaldstrasse 6,
D-6108 Weiterstadt 1 (DE)
Erfinder: Siol, Werner, Dr., Mühlbergstrasse 4,
D-6102 Pfungstadt (DE)

**Beschreibung**

Die Erfindung betrifft die Herstellung von wässrigen Kunststoffdispersionen mit hohem Pigmentbindevermögen, die sich als Bindemittel für wässrig-alkoholische Pigmentdruckpasten eignen.

Zum Bedrucken von Kunststoffolien, Metalloberflächen, Papier und Pappe nach dem Tiefdruck- oder Flexodruckverfahren verwendete man früher ausschliesslich Farb- und Pigmentdruckpasten, die als Bindemittel natürliche oder künstliche Harze in organischen Lösungsmitteln gelöst enthielten. Neuerdings werden wässrige oder wässrig-alkoholische Druckpasten bevorzugt, weil sie nicht brennbar sind und bei der Verarbeitung die Luft nicht mit Lösungsmitteldämpfen belasten. Dafür geeignete Bindemittel liegen entweder in Form von Lösungen in wasserverdünnbaren organischen Lösungsmitteln, insbesondere Alkoholen, oder in Form von lösungsmittelverdünnbaren wässrigen Dispersionen vor. Zur Herstellung von Druckpasten werden diese mit Wasser bzw. wässrigen Basen, im Falle von Dispersionen gegebenenfalls zusätzlich mit niederen Alkoholen verdünnt. Die in diesen Bindemittelsystemen enthaltenen Polymerisate enthalten erhebliche Mengen an Carboxylgruppen, die mit Basen, insbesondere Ammoniak oder flüchtigen organischen Aminen, neutralisiert werden und in dieser Form in dem wässrigen oder wässrigalkoholischen Medium echte oder kolloidale Lösungen bilden. Ein hoher Carboxylgruppengehalt und Neutralisationsgrad begünstigt zwar das Pigmentverteilungsvermögen und den Glanz des Druckes, beeinträchtigt aber andere wichtige Eigenschaften, wie die Wasserfestigkeit des Druckes und die Heissiegelbarkeit des bedruckten Substrats. Die Verwendung von flüchtigen Basen, die beim Trocknen des Druckes in die Luft entweichen, vermindert diese Nachteile bis zu einem gewissen Grad, bringt aber eine Geruchsbelästigung beim Drucken mit sich.

Typische wasserverdünnbare Bindemittel dieser Art sind aus den DE-OS 15 19 288, 21 61 909 und 24 58 604 bekannt. Sie enthalten in niederen Alkoholen gelöste Mischpolymerisate aus niederen Alkylacrylaten, Styrol oder Methylmethacrylat und etwa 10 bis 20 Gew.-% eines Säuremonomeren.

Wegen der oben beschriebenen Nachteile, die mit dem Einsatz erheblicher Mengen an Säuremonomeren verbunden sind, ist auch schon versucht worden, einen Teil der Säuremonomeren durch andere polare Comonomere zu ersetzen. So enthalten Bindemittel gemäss der FR-PS 1 512 257 Hydroxyester der Acryl- oder Methacrylsäure und Bindemittel gemäss der DE-OS 24 34 996 Acryl- oder Methacrylamid.

Nach der DE-OS 28 01 099 werden Bindemittel in Form wässriger Dispersionen von Kunststoff hergestellt, die verhältnismässig niedrige Mengen an Säuremonomeren enthalten. Um sie dennoch mittels Basen in den Lösungszustand überführen zu können, sind an ihrem Aufbau andere stark polare Monomere, wie Methylolamide oder Hydroxyester der Acryl- oder Methacrylsäure oder Vinylpyrrolidon beteiligt. Da zur Herstellung dieser Bindemitteldispersionen im allgemeinen recht erhebliche Mengen an niederen Alkylacrylaten eingesetzt werden, sind sie verhältnismässig weich und ergeben klebrige und empfindliche Drucke. Darüber hinaus macht die Kombination von Säuremonomeren und anderen hydrophilen Comonomeren den Druck wasserempfindlich.

Aus der DE-AS 2 228 515 ist die Herstellung von Polyacrylatdispersionen mit einem Gehalt von höchstens 2,5% Säuremonomeren bekannt. Bei diesem Verfahren werden die Säuremonomeren überwiegend in der Anfangsphase der Polymerisation eingesetzt, wobei sie einen Mengenanteil von 3 bis 15% des zulaufenden Monomerengemisches bilden. Beim Zusatz von Basen verdicken diese Dispersionen und zeichnen sich durch eine hohe Pigmentverträglichkeit und Scherstabilität aus. Sie ergeben infolge ihres niedrigen Carboxylgruppengehaltes jedoch keine echten oder kolloidalen Lösungen und eignen sich wohl zur Herstellung hochgefüllter Farben für Innenanstriche, jedoch nicht für Pigmentdruckpasten.

Der Erfindung liegt die Aufgabe zugrunde, wässrige Kunststoffdispersionen für die Bereitung von wässrig-alkoholischen Bindemitteln für Pigmentdruckpasten herzustellen, die nicht die oben beschriebenen Nachteile der bekannten Bindemittel haben. Gefordert wird eine gute Haftung auf Kunststoffolien, Metallen, Papier und Pappe, ein klebfreier, kratzfester Druck von hohem Glanz sowie von hoher Wasserfestigkeit, und bei Verwendung von gelösten Farbstoffen, guter Transparenz, Heissiegelbarkeit und Lakkierbarkeit mit wässrigen oder lösungsmittelhaltigen Systemen.

Die gestellte Aufgabe wird bei einem Verfahren zur Herstellung von wässrigen Kunststoffdispersionen durch radikalische Emulsionspolymerisation von wasserunlöslichen, äthylenisch ungesättigten, radikalisch polymerisierbaren Monomeren und einer $\alpha$, $\beta$-ungesättigten Carbonsäure unter allmählichem Zusatz der Monomeren zu einer wässrigen Vorlage erfindungsgemäss dadurch gelöst, dass man 1 bis 4 Gew.-% eines wasserlöslichen Salzes der $\alpha$, $\beta$-ungesättigten Carbonsäure in der wässrigen Vorlage löst und die wasserunlöslichen Monomeren sowie mindestens 2 Gew.-% der $\alpha$, $\beta$-ungesättigten Carbonsäure in freier Form oder in Salzform allmählich zusetzt; dabei wird das Salz der Carbonsäure als freie Säure berechnet und deren Gewichtsanteil auf das Gesamtgewicht der Monomeren bezogen.

Obwohl die Erfindung nicht auf eine bestimmte Theorie festgelegt werden soll, lassen sich die vorteilhaften Eigenschaften der erfindungsgemäss hergestellten Dispersionen vermutlich auf die besondere Form chemischer Uneinheitlichkeit zurückführen, die durch das erfindungsgemässe Polymerisationsverfahren verursacht wird. Der Einsatz eines beträchtlichen Anteils der ungesättigten Carbonsäure in der Vorlage bewirkt, dass in der Anfangsphase der Polymerisation hoch carboxylgruppenhaltige Polymerisatanteile gebildet werden, während im weiteren Verlauf der Polymerisation ein Polymerisat gebildet wird, dessen Zusammensetzung und Carboxylatgehalt der Zusammensetzung des zulaufenden Monomerengemisches entspricht. Die anfangs gebildeten, hoch carboxylathaltigen Anteile verleihen dem Emulsionspolymerisat sein hohes Pigmentbindevermögen und die Fähigkeit, transparente, glänzende Überzüge zu bilden. Dieser Polymerisatanteil liegt jedoch in einer so begrenzten Menge vor, dass seine starke Verdichtungswirkung im alkalischen Bereich nicht zu einer unerwünscht hohen Viskosität der Druckpaste führt. Der Hauptteil des entstehenden Polymerisats hat einen deutlich unter 8 Gew.-% liegenden Anteil an Einheiten von ungesättigten Carbonsäuren und bewirkt keine unerwünscht starke Verdickung im alkalischen Bereich. Dieser Polymerisatanteil ist für die gute Wasserfestigkeit der aus der Dispersion gebildeten Überzüge sowie für ihre Lackierbarkeit und Heissiegelbarkeit verantwortlich. Möglicherweise sind die verschiedenen Polymerisatanteile durch Pfropfung wenigstens teilweise miteinander verknüpft.

Bei der bevorzugten Ausführungsform der Erfindung werden als wasserunlösliche, äthylenisch ungesättigte Monomere überwiegend oder ganz Alkylester der Acryl- und/oder Methacrylsäure mit 1–8 C-Atomen im Alkylrest eingesetzt. Bekanntlich unterscheidet man bei diesen Estern solche, die dem Polymerisat Härte verleihen, vor allem die niederen Ester der Methacrylsäure mit 1–3 C-Atomen im Alkylrest, und solche, die dem Polymerisat Weichheit und Elastizität verleihen, insbesondere Acrylsäurealkylester und höhere Methacrylsäurealkylester. Zu den Härte verleihenden Monomeren gehört auch Styrol. Es wird ein ausgewogenes Mengenverhältnis dieser beiden Monomerentypen angestrebt, bei dem die aus der Dispersion erzeugten Filme kratzfest und klebfrei sind und eine gute Haftung am Untergrund haben. In der Regel überwiegt der Anteil der hartmachenden Comonomeren. Der $T\lambda_{max}$-Wert (nach DIN 53 445) liegt vorzugsweise oberhalb 40°C.

Weitere wasserunlösliche Comonomere, die jedoch vorzugsweise nicht den überwiegenden Anteil des Polymerisats bilden, sind z.B. Vinylester, Vinylchlorid und Acrylnitril.

Der Gesamtanteil an Einheiten von einer oder mehreren ungesättigten Carbonsäuren oder ihren Salzen, berechnet als freie Säureeinheiten, liegt vorzugsweise bei 3 bis 8 Gew.-%. Acryl- und Methacrylsäure sind die bevorzugten Carbonsäuren, jedoch können auch andere ungesättigte Carbonsäuren, wie Malein-, Fumar- oder Itakonsäure, stattdessen oder daneben eingesetzt werden. Der in der Vorlage eingesetzte Anteil der ungesättigten Carbonsäure muss in Form eines wasserlöslichen Salzes vorliegen. In der Regel werden Alkali- oder Ammoniumsalze eingesetzt, wobei sich die letzteren vom Ammoniak oder von organischen Aminen, wie z.B. Äthanolamin, ableiten können. Natrium-, Kalium- und Ammoniumacrylat und -methacrylat sind bevorzugt. Der gleichzeitig mit den wasserunlöslichen Monomeren zulaufende Teil der ungesättigten Carbonsäuren wird vorzugsweise im Gemisch mit diesen in Form der freien Carbonsäure eingesetzt. Man kann jedoch auch einen Teil dieses Carbonsäureanteils in Form einer wässrigen Salzlösung getrennt zugeben. Nach Abschluss der Polymerisation, spätestens bei der Zubereitung der Druckpaste, wird mit wässrigen Alkalien oder organischen Aminen auf einen pH-Wert über 7 eingestellt.

Die Polymerisation wird erfindungsgemäss nach dem sogenannten «Zulaufverfahren» durchgeführt. Dabei wird die wässrige Phase der herzustellenden Dispersion insgesamt oder teilweise im Polymerisationsgefäss vorgelegt und der erste Anteil der ungesättigten Carbonsäure in Salzform in dieser wässrigen Vorlage gelöst. In der wässrigen Vorlage wird – in an sich bekannter Weise – ein wasserlöslicher Polymerisationsinitiator, wie z.B. Kalium- oder Ammoniumpersulfat oder Wasserstoffperoxid sowie ein oder mehrere übliche Emulgiermittel gelöst.

In der Regel werden anionische Emulgiermittel eingesetzt, jedoch sind auch nichtionische Emulgiermittel verwendbar. Die bekannten Regeln, nach denen sich durch die Auswahl von Art und Menge der Emulgiermittel die Teilchengrösse, die Viskosität und andere Eigenschaften der Dispersionen einstellen lassen, sind hier sinngemäss anwendbar; hierzu wird auf die DE-OS 18 04 159, die DE-AS 1 910 488 und die DE-PS 1 910 532 verwiesen.

Die wasserunlöslichen Monomeren werden unter Polymerisationsbedingungen zu der Vorlage gegeben, so dass die zufliessenden Monomeren sofort polymerisieren können. Wenn die Vorlage bereits die Gesamtmenge der Wasserphase enthält, werden die wasserunlöslichen Monomeren im Gemisch mit der für den Zulauf vorgesehenen ungesättigten Carbonsäure nach dem Monomerzulaufverfahren zu dem Reaktionsgemisch gegeben. Man lässt das flüssige Monomerengemisch gleichmässig innerhalb mehrerer Stunden mit solcher Geschwindigkeit zulaufen, dass die freiwerdende Polymerisationswärme laufend abgeführt und die Polymerisationsbedingungen konstant gehalten werden können. Während der Polymerisation kann gegebenenfalls weiteres Emulgiermittel und weiterer Polymerisationsinitiator nachgegeben werden. Dieses sogenannte Monomerzulaufverfahren ist besonders bevorzugt, wenn Bindemittel mit hohem Pigmentbindevermögen und Drucke von hohem Glanz erwünscht sind.

Wenn die Vorlage nur einen Teil der emulgiermittelhaltigen Wasserphase enthält, wird das Monomerengemisch im übrigen Teil der Wasserphase emulgiert und in dieser Form allmählich zulaufen gelassen, wobei in der gleichen Weise wie oben für konstante Polymerisationsbedingungen gesorgt wird. In diesem Falle kann der zulaufende Teil der ungesättigten Carbonsäure teilweise neutralisiert sein. Nach Abschluss der Polymerisation hält man die Polymerisationsbedingungen zweckmässigerweise noch längere Zeit aufrecht. Spätestens bei der Druckpastenzubereitung wird mit einer Base neutralisiert.

Im nicht neutralisierten Zustand ist die Viskosität der Dispersionen auch bei hohem Feststoffgehalt niedrig und gewährleistet eine gute Handhabbarkeit.

Die neutralisierte Dispersion hat eine Viskosität im Bereich von etwa 100 bis 50 000 mPa.s bei 20°C. Die Viskosität der Dispersion hängt von einer Reihe von Verfahrensparametern ab, die daher sorgfältig aufeinander abgestimmt werden müssen. Viskositätssteigernd wirkt sich ein hoher Gesamtgehalt an Carbonsäureeinheiten sowie ein hoher Carbonsäuregehalt an den zulaufenden Monomeren, ferner ein hoher Neutralisationsgrad bzw. pH-Wert, eine niedrige Teilchengrösse und ein hoher Feststoffgehalt aus. Weiterhin haben die Glastemperaturen der Polymeren und die Natur der zur Neutralisation verwendeten Base Einfluss auf die Viskosität.

Die neutralisierte Dispersion kann unmittelbar zur Herstellung von Druckpasten verwendet werden. Zu diesem Zweck werden organische oder anorganische Farbpigmente in einer Menge von etwa 2 bis 20 Gew.-% (bezogen auf die fertige Druckpaste) und gegebenenfalls weitere übliche Zusätze eingerührt. Anschliessend wird ein wasserverdünnbares organisches Lösungsmittel, insbesondere ein niederer aliphatischer Alkohol, wie Methanol, Äthanol, Propanol, Isopropanol oder Butanol zugesetzt, wodurch die Dispersionsteilchen in den gelösten oder kolloidal gelösten Zustand übergehen. In der Regel wird es bevorzugt, diese Lösungsmittel zu der unpigmentierten Dispersion zuzugeben und die entstandene Lösung zu pigmentieren. Schliesslich ist es auch möglich, die nicht vollständig neutralisierte Dispersion, beispielsweise durch Sprühtrocknung, in ein pulveriges Festprodukt überzuführen, das sich später durch Vermischen mit einem Wasser-Alkohol-Gemisch und Zugabe von Alkali und Pigmenten in eine Druckpaste überführen lässt.

Die Druckpaste wird auf einen für den Druckvorgang geeigneten Viskositätswert im Bereich von etwa 1500 bis 3000 mPa.s eingestellt, was einer Auslaufzeit von 25–30 sec in 4 mm-Auslaufbecher nach DIN 53 211 entspricht. Sie zeichnet sich durch eine gute Verteilung der Farbpigmente und durch gute Benetzung der zu bedruckenden Substrate aus.

Die vorteilhaften Eigenschaften der erzeugten Drucke, insbesondere ihr Aussehen, ihre Kratzfestigkeit, ihre Scheuerfestigkeit im nassen Zustand, die Haftung auf dem Untergrund, der Glanz und die Oberflächenklebrigkeit, werden in den nachfolgenden Beispielen veranschaulicht und Drucken mit bekannten Druckpasten gegenübergestellt.

Beispiele

Beispiel 1

A. Herstellung von Binderdispersionen

In ein Polymerisationsgefäss mit Rührwerk und Heiz- bzw. Kühlmantel wird eine Vorlage aus

3019   g Wasser
   8,4 g Ammoniumpersulfat
 119   g 30%ige Natronlauge
bzw.
   60,9 g wässriges Ammoniak (25%ig)
   77   g Methacrylsäure (2 Gew.-Teile)
   31,5 g Triisobutylphenol, mit 6 Mol Äthylenoxid oxäthyliert, sulfatiert, Na-Salz (Emulgator)

gegeben und ein Monomerengemisch aus

2461   g Methylmethacrylat (64 Gew.-Teile)
1155   g n-Butylacrylat (30 Gew.-Teile)
 154   g Methacrylsäure (4 Gew.-Teile)
  38,5 g 2-Äthyl-hexyl-thioglykolat

innerhalb 4 Stunden bei etwa 80°C zulaufen gelassen. Nach Abschluss des Zulaufs werden nochmals 20,9 g Ammoniumpersulfat zugegeben und der Ansatz eine weitere Stunde bei 80°C gehalten. Anschliessend wird die der einpolymerisierten freien Methacrylsäure entsprechende Menge 30%iger Natronlauge oder 25%igen wässrigen Ammoniaks zugegeben. Die Dispersion wird mit Wasser auf einen Feststoffgehalt von 45 Gew.-% eingestellt.

B. Herstellung einer Druckpaste

100 Gew.-Teile der gemäss A hergestellten Dispersion werden mit 100 Gew.-Teilen Isopropylalkohol vermischt und 50 Gew.-Teile einer handelsüblichen, mit Wasser im Verhältnis 1:1 verdünnten Flexodruckfarbe (Flexonylblau B2G, Warenzeichen der Hoechst AG) eingerührt.
Durch Wasserzugabe wird die Viskosität auf eine Auslaufzeit von 25 bis 30 sec im 4 mm-Auslaufbecher (nach DIN 53 211) eingestellt.
Zur Feststellung der Pigmentverträglichkeit wird die Druckfarbe zwischen 2 Objektträgern dünn verteilt und visuell bewertet.
Zum Vergleich wird eine Bindemittellösung nach Beispiel 1 der DE-OS 24 58 604 hergestellt. 200 Gew.-Teile der Lösung werden mit 50 Gew.-Teilen der verdünnten Flexodruckfarbe zu einer Druckfarbe verrührt und mit Wasser eine Viskosität von 25 bis 30 sec (4 mm-Auslaufbecher, DIN 53 211) eingestellt.
Weiterhin wird in entsprechender Weise eine Druckpaste mit einem handelsüblichen Bindemittel («Zinpol 1519», Warenzeichen der Worlee Chemie GmbH) mit gleicher Auslaufzeit hergestellt.

C. Druckversuch

Weich-PVC-Kalanderfolien werden auf einer Labor-Tiefdruckmaschine mittels einer Rasterwalze mit einem Viertelton-, Halbton und Volltondruck in einer Auftragsstärke von etwa 10, 20 bzw. 40 µm bedruckt und bei 80°C getrocknet. Die Tiefdruckwalzen lassen sich mit einem ammonialkalischen Wasser-Äthanol-Gemisch leicht reinigen.

Ergebnisse

| Bindemittel gemäss Erfindung | | | Eigenschaften des Druckes | | | | | | |
|---|---|---|---|---|---|---|---|---|---|
| in der Vorlage | Neutralisation bis 100% mit | Pigmentverteilung | Aussehen | Kratzfestigkeit (trocken) | Nassscheuerfestigkeit | Haftung am Untergrund | Glanz | Klebfreiheit | Heisssiegelbarkeit |
| Na–MA | NaOH | + + + | + + + | + + + | + + | + + + | + + + | + + | + − |
| Na–MA | NH$_3$ | + + + | + + + | + + + | + + | + + + | + | + + | + |
| NH$_4$–MA | NaOH | + + + | + + | + + + | + + | + + + | + | + + | + |
| NH$_4$–MA | NH$_3$ | + + + | + | + + + | + + + | + + + | + − | + + | + + |
| Bindemittel nach DE-OS 25 48 604, Beispiel 1 | | + − | − | − | − − | − | + + + | + + | nicht geprüft |
| Handelsübliches Flexodruckfarben-Bindemittel (Zinpol 1519, Worlec) | | + + + | + + + | + | − − | + + | + + + | + − | − − |

Bedeutung der Abkürzungen und Bewertungen:
Na–MA = Natrium-methacrylat     + + + = sehr gut     + − ausreichend
NH$_4$–MA = Ammonium-methacrylat    + + = gut     − = nicht ausreichend
                                                    + = befriedigend     − − = schlecht

Beispiele 2 und 3

Nach dem Verfahren gemäss Beispiel 1 werden zwei weitere Bindemitteldispersionen hergestellt, jedoch werden Monomerengemische aus

Beispiel 2    Beispiel 3
72 Gew.-Teilen   73 Gew.-Teilen   Methylmethacrylat
22 Gew.-Teilen   22 Gew.-Teilen   Buthylmethacrylat
3 Gew.-Teilen   3 Gew.-Teilen   Methacrylsäure

im Zulauf, sowie

3 Gew.-Teile    2 Gew.-Teile    Methacrylsäure (als Na-Salz)

in der Vorlage eingesetzt. Nach der Polymerisation wird mit Natronlauge auf 100% neutralisiert und zur Überführung in eine Lösung Isopropylalkohol zugesetzt.

Entsprechend Beispiel 1 werden Druckpasten hergestellt und Druckversuche durchgeführt. Eigenschaften der Druckfarben bzw. Drucke: Beispiel 2 Beispiel 3

| | Beispiel 2 | Beispiel 3 |
|---|---|---|
| Pigmentverteilung | + + | + + |
| Trockenkratzfestigkeit | + | + + |
| Nassscheuerfestigkeit | + + | + + + |
| Aussehen | + + | + + |
| Glanz | + + | + + |

(Bewertung wie im Beispiel 1)

Beispiel 4

Nach dem Verfahren gemäss Beispiel 1 wird eine Bindemitteldispersion hergestellt unter Einsatz von 2 Gew.-Teilen Methacrylsäure als Natriumsalz in der Vorlage und einem Monomerenzulauf aus

59 Gew.-Teilen Methylmethacrylat
35 Gew.-Teilen Butylacrylat
4 Gew.-Teilen Methacrylsäure

Nach der Polymerisation wird mit Ammoniak 100%ig neutralisiert, Isopropylalkohol zugesetzt und wie im Beispiel 1 eine Druckfarbe hergestellt. Dabei erweist sich das Bindemittel als pigmentverträglich. Beim Druckversuch auf einer Weich-PVC-Folie entsteht ein heissiegelfähiger Druck mit gutem Glanz, guter Kratzfestigkeit, hinreichender Nassscheuerfestigkeit und geringer Klebrigkeit.

Beispiel 5

In ein Polymerisationsgefäss mit Rührwerk und Heiz- bzw. Kühlmantel wird eine Vorlage aus

890    g Wasser
6    g Ammoniumpersulfat
43,4 g wässriges Ammoniak, 25%ig
55    g Methacrylsäure
11,25 g Triisobutylphenol m.6 Mol Äthylenoxid, oxäthyliert, sulfatiert, Na-Salz (Emulgator)

gegeben und eine Emulsion aus

1348     g Wasser
1760     g Methylmethacrylat (64 Gew.-Teile)
825     g n-Butylacrylat (30 Gew.-Teile)
110     g Methacrylsäure (4 Gew.-Teile)
27,5   g 2-Äthyl-hexyl-thioglykolat
11,25 g Triisobutylphenol, mit 6 Mol Äthylenoxid oxäthyliert, sulfatiert, Na-Salz (Emulgator)

innerhalb 4 Stunden bei etwa 80°C zulaufen gelassen. Nach Abschluss des Zulaufs werden nochmals 3 g Ammoniumpersulfat zugegeben und der Ansatz eine weitere Stunde bei 80°C gehalten. Anschliessend wird die der einpolymerisierten freien Methyacrylsäure entsprechende Menge 25%igen wässrigen Ammoniaks zugegeben. Die Dispersion wird mit Wasser auf einen Feststoffgehalt von 40 Gew.-% eingestellt.

Nach Zusatz von Isopropanol wird wie im Beispiel 1 eine Druckfarbe hergestellt. Beim Druckversuch auf einer Weich-PVC-Folie entsteht ein heisssiegelfähiger Druck mit befriedigendem Glanz, guter Kratz- und Nassscheuerfestigkeit, sowie geringer Klebrigkeit.

## Patentansprüche

1. Verfahren zur Herstellung von wässrigen Kunststoffdispersionen mit hohem Pigmentbindevermögen durch radikalische Emulsionspolymerisation von wasserunlöslichen, äthylenisch ungesättigten, radikalisch polymerisierbaren Monomeren und einer α, β-ungesättigten Carbonsäure unter allmählichem Zusatz der Monomeren zu einer wässrigen Vorlage unter Polymerisationsbedingungen, dadurch gekennzeichnet, dass man 1 bis 4 Gew.-% eines wasserlöslichen Salzes der α, β-ungesättigten Carbonsäure (berechnet als freie Säure, bezogen auf das Gesamtgewicht der Monomeren) in einer wässrigen Vorlage löst und die wasserunlöslichen Monomeren sowie mindestens 2 Gew.-% der α, β-ungesättigten Carbonsäure in freier Form oder teilweise in Salzform allmählich zusetzt.

2. Verfahren nach Anspruch 1, dadurch gekennzeichnet, dass man die wasserunlöslichen Monomeren, gegebenenfalls zusammen mit der ungesättigten Carbonsäure, als solche in nicht emulgierter Form zusetzt.

3. Kunststoffdispersion, hergestellt nach dem Verfahren der Ansprüche 1 oder 2.

4. Verwendung der Kunststoffdispersion nach Anspruch 3 in neutralisierter Form zusammen mit einem wasserverdünnbaren organischen Lösungsmittel als Bindemittel für Druckfarben bzw. -pasten.

## Revendications

1. Procédé de préparation de dispersions aqueuses de résines synthétiques à forte capacité de fixation de pigments par polymérisation radicalaire en émulsion de monomères à insaturation éthylénique insolubles dans l'eau et aptes à une polymérisation radicalaire et d'un acide carboxylique alpha, bêta-insaturé avec addition progressive des monomères à un mélange préalable aqueux dans les conditions de la polymérisation, caractérisé en ce que, on dissout 1 à 4% en poids d'un sel hydrosoluble de l'acide carboxylique alpha, bêta-insaturé (exprimé en acide libre, par rapport au poids total des monomères) dans un mélange préalable aqueux et on ajoute peu à peu les monomères insolubles et au moins 2% en poids de l'acide carboxylique alpha, bêta-insaturé à l'état libre ou en partie à l'état de sel.

2. Procédé selon la revendication 1, caractérisé en ce que l'on ajoute les monomères insolubles dans l'eau, éventuellement avec l'acide carboxylique insaturé, tels quels à l'état non émulsionné.

3. Dispersion de résine synthétique préparée par le procédé selon la revendication 1 ou 2.

4. Utilisation de la dispersion de résine synthétique selon la revendication 3, à l'état neutralisé et avec un solvant organique diluable à l'eau, en tant que liant pour encres ou pâtes d'impression.

## Claims

1. Process for preparing aqueous plastic dispersions with a high pigment-binding capacity by the radical emulsion polymerisation of water-insoluble, ethylenically unsaturated, radically polymerisable monomers and an α, β-unsaturated carboxylic acid, with the gradual addition of the monomers to an aqueous preparation under polymerisation conditions, characterised in that 1 to 4% by weight of a water-soluble salt of the α, β-unsaturated carboxylic acid (calculated as a free acid in relation to the total weight of the monomers) is dissolved in an aqueous preparation, and the water-insoluble monomers and at least 2% by weight of the α, β-unsaturated carboxylic acid are added gradually in free from or partly in salt form.

2. Process according to Claim 1, characterised in that the water-insoluble monomers, optionally together with the unsaturated carboxylic acid, are added as such in nonemulsified form.

3. Plastic dispersion prepared according to the process of Claims 1 or 2.

4. Use of the plastic dispersion according to Claim 3 in neutralised form, together with a water-dilutable organic solvent, as a binder for printing inks or pastes.